# EUROPÄISCHE PATENTSCHRIFT

(11) **EP 0 514 916 B1**
(45) Veröffentlichungstag und Bekanntmachung des Hinweises auf die Patenterteilung: **09.10.1996**
(21) Anmeldenummer: 92108645.0
(22) Anmeldetag: 22.05.1992
(51) Int. Cl.: F16B 25/00, F16B 25/10, F16B 5/02

(54) **Schraube zum Befestigen von Gipskartonplatten**
Screw for fastening of gypsum plaster boards
Vis pour fixer des plaques de parement en plâtre

(30) Priorität: 24.05.1991 DE 4116981
(43) Veröffentlichungstag der Anmeldung: 25.11.1992
(73) Patentinhaber: Adolf Würth GmbH & Co. KG, D-74653 Künzelsau (DE)
(72) Erfinder: Schuster, Armin, W-7119 Forchtenberg (DE)
(74) Vertreter: Patentanwälte Ruff, Beier, Schöndorf und Mütschele

(56) Entgegenhaltungen:
- EP-A- 0 147 515
- DE-A- 3 003 280
- DE-A- 3 333 385
- GB-A- 2 111 157

## Beschreibung

Die Erfindung betrifft eine Schraube zum Befestigen von Gipskartonplatten, Mineralfaserplatten oder dergleichen.

Gipskartonplatten bestehen aus einer zwischen zwei dünnen Kartons eingesetzten Gipsschicht. Beim Einschrauben einer Schraube zerreißt die Karton- bzw. Papierschicht an der Oberseite. Beim Einschrauben in Gipskarton- und Mineralfaserplatten wird das Material der Platte verdrängt und dringt zur Oberfläche durch, wo es neben dem Schraubenkopf dann zu Aufwerfungen kommt. Dies macht eine Nachbearbeitung durch Wegschleifen der Aufwerfungen erforderlich.

Es ist bereits eine Schraube zum Befestigen von beidseitig mit Papier beschichteten Gipsplatten an einer dünnwandigen, metallenen Tragkonstruktion bekannt (DE 23 24 675 C2). Bei einer Ausführungsform dieser Schraube ist an der im wesentlichen kegelförmig ausgestalteten Unterseite des Schraubenkopfs eine Schulterfläche ausgebildet, die in einer Ebene senkrecht zur Längsachse der Schraube liegt und von einer Kante begrenzt ist.

Ebenfalls bekannt ist eine Schraube (GB 2 111 157 A), die zur Befestigung eines Metallprofils an einer Platte bestimmt ist. Die Schraube enthält einen Rundkopf und ein teilweise ausgewalztes, teilweise unterbrochenes Gewinde. Sie ist zur Befestigung von Gipskartonplatten weder bestimmt noch geeignet.

Es ist bereits bekannt, zur Verhinderung des Auffaserns des Randes des Lochs in der Papierschicht eine Schraube zu verwenden, die an der Unterseite des Schraubenkopfs mit Abstand von der Stirnseite eine Randkante aufweist, deren Durchmesser zwischen dem Durchmesser des Schraubenkopfs und dem Durchmesser des Schraubenschafts liegt. Damit sollen die Ränder des Lochs im Papier in das Material der Gipskartonplatte hineingezogen werden.

Für derartige Platten ist ebenfalls schon vorgeschlagen worden, an der Stirnseite des Schraubenkopfs eine im Durchmesser vergrößerte Platte anzuordnen, die aufgrund ihres vergrößerten Durchmessers das aufgeworfene Material zurückhält (DE-A1-40 08 962).

Der Erfindung liegt die Aufgabe zugrunde, eine Schraube zum Befestigen von Gipskartonplatten o.dgl. derart weiter zu bilden, daß sie bei Gipskartonplatten und bei Mineralfaserplatten eine Befestigung ohne die Notwendigkeit einer Nachbehandlung der Oberfläche ermöglicht.

Zur Lösung dieser Aufgabe schlägt die Erfindung eine Schraube mit den Merkmalen des Anspruchs 1 vor. Weiterbildungen sind Gegenstand der Unteransprüche.

Das beim Eindringen des Gewindes in das Material der Platte, sei dies eine Gipskartonplatte oder eine Mineralfaserplatte, zur Vorderseite der Platte herausgeförderte Material, das durch die Verdrängung beim Rotieren der Schraube aus der Platte herausgelöst wird, wird von der ringförmigen Schulter am Ende des Gewindes wie mit Hilfe eines rotierenden Stempel in die Platte zurückgedrückt.

In Weiterbildung schlägt die Erfindung vor, daß die Schulterfläche im Bereich des Übergangs zwischen dem Schraubenkopf und dem Schraubenschaft ausgebildet bzw. angeordnet ist. Die Schulterfläche weist also von der Stirnseite des Schraubenkopfes, die in montiertem Zustand bündig mit der Oberseite der Platte verlaufen soll, einen Abstand, der bei montierter Platte ungefähr in der Mitte der Plattendicke liegen soll.

In Weiterbildung der Erfindung kann vorgesehen sein, daß die Schulterfläche von einer Stirnseite eines zylindrischen Ansatzes an der Unterseite des Schraubenkopfes gebildet wird. Dies erleichtert und vereinfacht die Herstellung der Schraube.

Insbesondere kann vorgesehen sein, daß der Schraubenkopf an seiner Unterseite einen Abschnitt mit sich verjüngendem Querschnitt und einen sich daran unmittelbar anschließenden Abschnitt mit Zylinderform aufweist, an dessen der Schraubenspitze zugewandter Stirnseite die Schulterfläche ausgebildet ist.

Es ist jedoch ebenfalls möglich und wird von der Erfindung vorgeschlagen, daß die Schulterfläche an einem etwa tellerartigen bzw. scheibenartigen Vorsprung ausgebildet ist. Auch dieser Vorsprung ist vorzugsweise im Bereich des Übergangs zwischen Schraubenkopf und Schraubenschaft angeordnet. Das beim Hineindrücken des Materials in die Platte möglicherweise seitlich ausweichende Material kann dann in dem Raum zwischen dem Schraubenkopf und dem tellerartigen Vorsprung nochmals gesammelt und dann vom Schraubenkopf festgehalten werden.

Die Schulterfläche liegt angenähert in einer senkrecht zur Längsachse der Schraube verlaufenden Ebene. Sie kann jedoch auch leicht von dieser Richtung abweichen, also auf einem sehr flachen Kegel liegen, wobei die Abweichung von der Radialebene vorzugsweise bis zu 5 Grad beträgt.

In Weiterbildung der Erfindung kann vorgesehen sein, daß der sich verjüngende Teil des Schraubenkopfes mindestens teilweise kegelstumpfförmig ausgebildet ist.

Ebenfalls möglich ist es, daß der sich verjüngende Teil des Schraubenkopfes mindestens teilweise geschwungen bzw. geschweift verläuft.

Es kann erfindungsgemäß vorgesehen sein, daß die Schulterfläche leicht hinterschnitten verläuft, so daß das Material vor ihr gesammelt wird.

In Weiterbildung der Erfindung kann vorgesehen sein, daß die Schraubenspitze eine Bohrspitze, ggf. mit einer Bohrschneide, aufweist.

Zum schnelleren Eindringen der Schraube kann vorgesehen sein, daß sie ein Doppelganggwinde aufweist.

Die Erfindung schlägt vor, daß der Außendurchmesser der Schulterfläche vorzugsweise zwischen etwa 10 und etwa 20 % größer als der Nenndurchmesser des Gewindes ist.

Die Erfindung schlägt ebenfalls vor, daß der Außendurchmesser der Schulter einen Wert von etwa dem halben Außendurchmesser des Schraubenkopfes aufweist.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

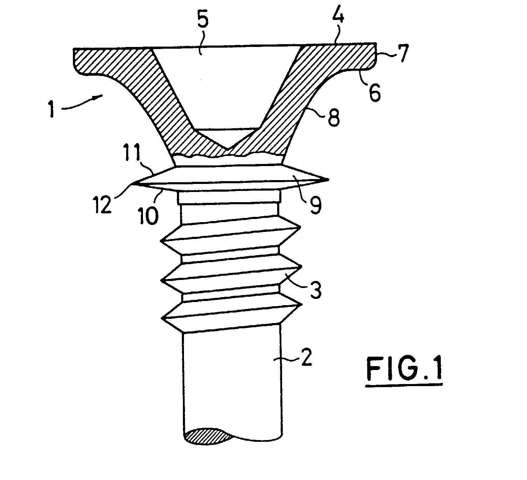

Fig. 1eine im Kopfbereich geschnittene Seitenansicht einer ersten Ausführungsform einer Schraube nach der Erfindung;

Die abgebrochen dargestellte Schraube in Fig. 1 enthält einen Schraubenkopf 1, der an einem Ende eines Schraubenschaftes 2 angeordnet ist. An dem gegenüberliegenden, in der Fig. 1 nicht dargestellten Ende des Schaftes 2 ist eine Schraubenspitze, ggf. mit einer Bohrschneide, ausgebildet. Der Schaft 2 ist im wesentlichen zylindrisch aufgebaut und enthält ein Gewinde 3, insbesondere ein doppelgängiges Gewinde.

Der Kopf 1 enthält, ausgehend von seiner Stirnseite 4, eine Vertiefung 5, die einen Schraubenantrieb bildet. Es kann sich hierbei beispielsweise um einen Kreuzschlitz oder eine andere Schraubenantriebsart handeln. Unterhalb der Stirnseite 4 ist der Schraubenkopf 1 plattenartig ausgebildet, derart, daß die Unterseite 6 des Schraubenkopfes 1 in einem ersten Bereich etwa parallel zur Stirnseite 4 verläuft. Der Außenrand 7 ist etwa zylindrisch ausgebildet. An den parallel zur Stirnseite 4 verlaufenden Teil der Unterseite 6 schließt sich ein Abschnitt 8 an, in dem sich der Schraubenkopf kontinuierlich verjüngt, bis er am Ende des Bereiches in den Durchmesser des Schraubenschaftes 2 übergeht. Bei der in Fig. 1 dargestellten Ausführungsform verläuft die den Längsschnitt begrenzende Außenseite des Abschnittes 8 leicht geschweift bzw. gebogen.

Im Übergangsbereich zwischen dem Schraubenkopf 1 und dem Schaft 2 ist ein Vorsprung 9 angewalzt. Dieser Vorsprung 9 hat etwa die Form eines Tellers bzw. einer Scheibe. Der Querschnitt dieses Vorsprungs 9 ist in beiden Endbereichen dreieckig, entspricht also fast der Form eines Gewindes, allerdings ohne Steigung. Auf der der in Fig. 1 unten zu denkenden Schraubenspitze zugewandten Seite bildet der Vorsprung 9 eine Schulter 10, die angenähert in einer Ebene liegt, die senkrecht zur Längsachse der Schraube verläuft. Aus Gründen der Herstellung weist die Schulter 10 jedoch einen Winkel von etwa 5 Grad gegenüber einer derartigen Ebene auf.

Die gegenüberliegende Seite 11 verläuft stärker geneigt. Zwischen der Unterseite 6 des Schraubenkopfes 1 und dem Vorsprung 9 ist ein Raum gebildet, in dem der Durchmesser der Schraube wieder kleiner ist als der Außendurchmesser der Schulter 10.

Der Außendurchmesser des durch eine Außenkante 12 begrenzten Vorsprungs 9 ist etwa 15 % größer als der Durchmesser des Gewindes und andererseits deutlich kleiner als der Außendurchmesser des Schraubenkopfes 1. Bei der dargestellten bevorzugten Ausführungsform beträgt der Außendurchmesser des Vorsprungs 9 und damit der Außendurchmesser der Schulter 10 etwa die Hälfte des Außendurchmessers des Schraubenkopfes 1.

Es ist auch möglich, daß der sich verjüngende Abschnitt 8 des Schraubenkopfes 1 der Ausführungsform nach Fig. 1 kegelstumpfförmig ausgebildet ist.

Die Wirkungsweise der erfindungsgemäßen Schraube ist folgende. Beim Einschrauben der Schraube in eine Gipskartonplatte oder Mineralfaserplatte zu ihrer Befestigung an einer Unterkonstruktion erfolgt zunächst eine Verdrängung des Materials der Platte durch die Schraube. Das Material wird dabei nach oben aus der Platte gedrückt. Gelangt die Schraubenspitze auf die Unterkonstruktion, so wird der weitere Vorschub durch das Schneiden des Lochs in die Unterkonstruktion bestimmt. Dies bedeutet, daß das Gewinde 3 das Material aus der Platte in verstärktem Maß zur Vorderseite befördert. Das dabei zur Oberseite beförderte verdrängte Material wird nun von der Schulterfläche 15 festgehalten und in die Platte zurückgedrückt. Beim weiteren Einschrauben erfolgt also ein Zurückführen des Materials in das von dem Schraubenschaft hergestellte Loch, so daß das Material daran gehindert wird, bis zur Oberfläche zu gelangen und dort die Oberfläche aufzuwerfen.

Außerdem wirkt die Schulterfläche wie ein Lochstempel, der einen Teil des Kartons herauslocht und somit ein weiteres Aufreißen des Kartons verhindert, das auftreten könnte, wenn die Fläche des eingezogenen Kartons zu groß wird.

Bei der Ausführungsform nach Fig. 1 folgt auf die Schulterfläche 10 noch ein Raum, in dem eventuell zur Seite gelangtes Material nochmals nach innen gelangen kann, so daß es dort Platz findet, wenn der Schraubenkopf 1 weiter eingeschraubt wird, bis seine Stirnseite 4 bündig mit der Oberfläche der Platte verläuft.

## Patentansprüche

1. Schraube zur Befestigung von Gipskartonplatten, Mineralfaserplatten o.dgl., mit
1.1 einem ein scharfkantiges Gewinde (3) aufweisenden Schraubenschaft (3),
1.2 einer Schraubenspitze,
1.3 einem als Senkkopf ausgebildeten Schraubenkopf (1), der
1.3.1 an seiner Stirnseite (4) einen Schraubenantrieb (5) aufweist, sowie mit
1.4 einer zur Schraubenspitze gerichteten Schulterfläche (10, 15),
1.4.1 die einen axialen Abstand von der Stirnseite (4) des Schraubenkopfes (1) aufweist,
1.4.2 deren Außendurchmesser kleiner als der Außendurchmesser des Schraubenkopfes (1) und mindestens so groß wie der Gewindedurchmesser des Schraubenschaftes (2) ist, und
1.4.3 die angenähert in einer senkrecht zur Schraubenlängsachse verlaufenden Ebene liegt,
dadurch gekennzeichnet daß die Schulterfläche (10) an einem etwa tellerartigen bzw. scheibenartigen Vorsprung (9) ausgebildet ist.

2. Schraube nach Anspruch 1, dadurch gekennzeichnet, daß die Schulterfläche (15) leicht hinterschnitten verlaufend ausgebildet ist.

3. Schraube nach Anspruch 1 oder 2, bei der die Schulterfläche (10, 15) im Bereich des Übergangs zwischen dem Schraubenkopf (1) und dem Schraubenschaft (2) ausgebildet ist.

4. Schraube nach Anspruch 1 bis 3, bei der die Schulterfläche (15) von einer Stirnseite eines zylindrischen Ansatzes (14) an der Unterseite des Schraubenkopfes (1) gebildet wird.

5. Schraube nach einem der vorhergehenden Ansprüche, bei der der Schraubenkopf (1) eine Unterseite (6) mit einem Abschnitt (8, 13) mit sich verjüngendem Querschnitt und einem sich daran anschließenden Abschnitt (14) mit Zylinderform aufweist, dessen Stirnseite der Schulterfläche (15) bildet.

6. Schraube nach einem der vorhergehenden Ansprüche, bei der die Schulterfläche (10, 15) mit einer Radialebene einen Winkel von bis zu 5 Grad einschließt.

7. Schraube nach einem der vorhergehenden Ansprüche, bei der der sich verjüngende Teil (8, 13) des Schraubenkopfes mindestens teilweise Kegelstumpfform aufweist.

8. Schraube nach einem der vorhergehenden Ansprüche, bei der der sich verjüngende Teil (8, 13) des Schraubenkopfes (1) mindestens teilweise geschwungen bzw. geschweift verläuft.

9. Schraube nach einem der vorhergehenden Ansprüche, bei der die Schraubenspitze eine Bohrspitze, ggf. mit einer Bohrschneide, aufweist.

10. Schraube nach einem der vorhergehenden Ansprüche, bei der das Gewinde (3) ein Doppelganggewinde ist.

11. Schraube nach einem der vorhergehenden Ansprüche, bei der der Außendurchmesser der Schulterfläche (10, 15) zwischen etwa 10 und etwa 20 % größer als der Nenndurchmesser des Gewindes (3) ist.

12. Schraube nach einem der vorhergehenden Ansprüche, bei der der Außendurchmesser der Schulterfläche (10, 15) einen Wert von etwa dem halben Außendurchmesser des Schraubenkopfes (1) aufweist.

## Claims

1. Screw for fixing plasterboards, mineral fibre boards, etc. with
1.1 a screw shank (2) having a sharp-edged thread (3),
1.2 a screw tip,
1.3 a screw head (1) constructed as a countersunk head and which has
1.3.1 on its end face (4) a screw drive (5), as well as with
1.4 a shoulder face (10, 15) directed towards the screw tip,
1.4.1 which has an axial spacing from the end face (4) of the screw head (1),
1.4.2 whose external diameter is smaller than the external diameter of the screw head (1) and at least as large as the thread diameter of the screw shank (2) and
1.4.3 which is located approximately in a plane perpendicular to the screw longitudinal axis,
characterized in that the shoulder face (10) is constructed on an approximately plate-like or disk-like projection (9).

2. Screw according to claim 1, characterized in that the shoulder face (15) is slightly undercut.

3. Screw according to claim 1 or 2, in which the shoulder face (10, 15) is constructed in the vicinity of the transition between the screw head (1) and the screw shank (2).

4. Screw according to claim 1 to 3, in which the shoulder face (15) is formed by an end face of a cylindrical step (14) on the underside of the screw head (1).

5. Screw according to one of the preceding claims, in which the screw head (1) has an underside (6) with a portion (8, 13) with a tapering cross-section and a cylindrically shaped portion (14) connected thereto and whose end face forms the shoulder face (15).

6. Screw according to one of the preceding claims, in which the shoulder face (10, 15) forms with a radial plane an angle of up to 5°.

7. Screw according to one of the preceding claims, in which the tapering part (8, 13) of the screw head has an at least partial frustum shape.

8. Screw according to one of the preceding claims, in which the tapering part (8, 13) of the screw head (1) is at least partly swung or curved.

9. Screw according to one of the preceding claims, in which the screw tip is a drilling tip, optionally with a bit.

10. Screw according to one of the preceding claims, in which the thread (3) is a double-start thread.

11. Screw according to one of the preceding claims, in which the external diameter of the shoulder face (10, 15) is between approximately 10 and approximately 20% larger than the nominal diameter of the thread (3).

12. Screw according to one of the preceding claims, in which the external diameter of the should face (10, 15) has a value of approximately half the external diameter of the screw head (1).

## Revendications

1. Vis pour la fixation de plaques de parement en plâtre, de plaques en fibres minérales ou semblables comportant
1.1 une tige de vis (2) présentant une filet acéré (3),
1.2 une pointe de vis,
1.3 une tête de vis (1) sous forme de tête fraisée, qui
1.3.1 présente à sa face frontale (4) une empreinte (5), ainsi
1.4 qu'un épaulement (10, 15) orienté vers la pointe de la vis,
1.4.1 qui se trouve à une certaine distance axiale de la face frontale (4) de la tête de la vis (1),
1.4.2 dont le diamètre extérieur est plus petit que le diamètre extérieur de la tête de vis (1) et au moins aussi grand que le diamètre du filet de la tige de vis (2), et
1.4.3 qui se trouve approximativement dans un plan perpendiculaire à l'axe longitudinal de la vis, caractérisée en ce que l'épaulement (10) est formé sur un ressaut (9) pratiquement en forme d'assiette ou de disque.

2. Vis suivant la revendication 1, caractérisée en ce que l'épaulement (15) présente une légère contre-dépouille.

3. Vis suivant la revendication 1 ou 2, pour laquelle l'épaulement (10, 15) est formé dans la zone de transition entre la tête de vis (1) et la tige de vis (2).

4. Vis suivant les revendications 1 à 3, pour laquelle l'épaulement (15) est formé par une face frontale d'un ressaut cylindrique (14) à la face inférieure de la tête de vis (1).

5. Vis suivant l'une des revendications précédentes, pour laquelle la tête de vis (1) présente une face inférieure (6) avec une partie (8, 13) dont la section se rétrécit progressivement et une partie de forme cylindrique (14) s'y raccordant, dont la face frontale forme l'épaulement (15).

6. Vis suivant l'une des revendications précédentes, pour laquelle l'épaulement (10, 15) définit un angle de jusqu'à 5 degrés avec un plan radial.

7. Vis suivant l'une des revendications précédentes, pour laquelle la partie (8, 13) de la tête de vis (1) qui se rétrécit est au moins partiellement en forme de tronc de cône.

8. Vis suivant l'une des revendications précédentes, pour laquelle la partie (8, 13) de la tête de vis (1) qui se rétrécit est au moins partiellement recourbée ou en forme de S.

9. Vis suivant l'une des revendications précédentes, pour laquelle la pointe de la vis présente une pointe foreuse, le cas échéant avec une lame d'alésoir.

10. Vis suivant l'une des revendications précédentes, pour laquelle le filet (3) est un filet double.

11. Vis suivant l'une des revendications précédentes, pour laquelle le diamètre extérieur de l'épaulement (10, 15) est entre 10% et environ 20% plus grand que le diamètre nominal du filet (3).

12. Vis suivant l'une des revendications précédentes, pour laquelle le diamètre extérieur de l'épaulement (10, 15) est environ égal à la moitié du diamètre extérieur de la tête de vis (1).
